# FASCICULE DE BREVET EUROPEEN

(11) **EP 4 652 069 B1**
(45) Date de publication et mention de la délivrance du brevet: **14.10.2026**
(21) Numéro de dépôt: 23834254.7
(22) Date de dépôt: 04.12.2023
(51) Int. Cl.: B60R 16/03, H02H 3/093, G01R 31/00

(54) **PROCEDE DE PROTECTION D'UN ELEMENT DE CONNEXION D'UN RESEAU ELECTRIQUE DE PUISSANCE D'UN VEHICULE**
VERFAHREN ZUM SCHUTZ EINES VERBINDUNGSELEMENTS EINES ENERGIEVERSORGUNGSNETZES EINES FAHRZEUGS
METHOD FOR PROTECTING A CONNECTION ELEMENT OF A POWER SUPPLY NETWORK OF A VEHICLE

(30) Priorité: 18.01.2023 FR 2300465
(43) Date de publication de la demande: 26.11.2025
(73) Titulaire: Stellantis Auto SAS, 78300 Poissy (FR)
(72) Inventeur: MOUSTAOULI, Ayoub, Casablanca, 20570 (MA); MORNET, Mickael, 78330 Fontenay le Fleury (FR); CINNERI, Patrice, 95870 Bezons (FR)
(74) Mandataire: PSIP
(86) Numéro de dépôt international: PCT/FR2023/051908
(87) Numéro de publication internationale: WO 2024/153864

(56) Documents cités:
- GB-A- 2 563 041
- US-A1- 2012 094 509
- US-A1- 2015 109 707
- US-A1- 2020 062 124
- US-A1- 2022 399 590

## Description

La présente invention revendique la priorité de la demande française 2300465 déposée le 18.01.2023 .

Un aspect de l'invention se rapporte à un procédé de protection d'un élément de connexion électrique d'un réseau électrique de puissance, ledit élément de connexion étant connecté à un composant électrique dudit réseau électrique de puissance.

Cet aspect de l'invention trouve des applications particulièrement intéressantes dans le domaine des véhicules électriques ou hybrides.

De tels véhicules sont usuellement équipés de composants électriques de puissance pouvant être alimentés selon une tension fournie par une batterie de puissance, par exemple de 48V ou 400V. Ces composants électriques de puissance peuvent par exemple être formés par une batterie de puissance, une machine électrique de traction du véhicule ou par un compresseur de climatisation du véhicule.

Ces composants électriques de puissance sont connectés entre eux au moyen d'éléments de connexion électrique formés par exemple par des câbles électriques, des connecteurs ou des barres d'interconnexion (ou busbar en anglais).

Chacun des composants électriques de puissance présente une plage de tensions de fonctionnement. Par exemple, certains compresseurs de climatisation peuvent présenter une tension minimale de fonctionnement de 200V et une tension maximale de fonctionnement de 450V.

Ainsi, les éléments de connexion sont parfois traversés par des courants de forte intensité. Lorsque le courant est trop important et circule sur une longue période, l'élément de connexion peut être endommagé.

Le document US 2015/109707 divulgue un procédé de protection d'un élément de connexion électrique connecté à un composant électrique d'un réseau électrique de puissance d'un véhicule électrique ou hybride, ledit procédé comportant les étapes suivantes, exécutées par des moyens de contrôle dudit véhicule : · déterminer un premier courant glissant dudit composant électrique, ledit premier courant glissant étant déterminé sur une première période ; · déterminer une première limitation de courant pour ledit composant électrique, ladite première limitation de courant étant fonction dudit premier courant glissant déterminé.

Le but de l'invention est de pallier les inconvénients de l'art antérieur en proposant un procédé de protection d'un élément de connexion électrique connecté à un composant électrique d'un réseau électrique de puissance permettant de protéger l'élément de connexion contre les surintensités.

Dans ce contexte, l'invention se rapporte ainsi, dans son acceptation la plus large, à un procédé de protection d'un élément de connexion électrique connecté à un composant électrique d'un réseau électrique de puissance d'un véhicule électrique ou hybride, le procédé comportant les étapes, exécutées par des moyens de contrôle du véhicule, de :
- Déterminer un premier courant glissant du composant électrique, le premier courant glissant étant déterminé sur une première période ;
- Déterminer une première limitation de courant pour le composant électrique, la première limitation de courant étant fonction du premier courant glissant déterminé ;
- Déterminer une intégrale de charge limite fonction de valeurs de courant instantané du composant électrique et d'un courant nominal de l'élément de connexion ;
- Déterminer une deuxième limitation de courant pour le composant électrique, la deuxième limitation de courant étant fonction de l'intégrale de charge limite déterminée ;
- Déterminer une consigne de limitation de courant à appliquer au composant électrique, la consigne de limitation de courant étant égale la limitation de courant inférieure parmi les première et deuxième limitations de courant déterminées ;
- Appliquer la consigne de limitation de courant ou une consigne de limitation de puissance au composant électrique, la consigne de limitation de puissance étant égale à la consigne de limitation de courant multipliée par une tension nominale du composant électrique.

Grâce au procédé selon l'invention, le courant consommé ou fourni par un composant électrique est limité en fonction d'un courant glissant consommé ou fourni par ledit composant électrique, de valeurs de courant instantané dudit composant électrique et d'un courant nominal de l'élément de connexion électrique connecté audit composant électrique. Ainsi, il n'y a pas de risque d'endommagement de l'élément de connexion électrique connecté au composant électrique. Lorsque le procédé est appliqué à l'ensemble des composants électriques, l'ensemble des éléments de connexion électrique équipant l'architecture électrique de puissance du véhicule est protégé.

En outre, ce procédé est peu coûteux puisqu'il n'est pas nécessaire d'ajouter un quelconque capteur aux architectures électriques de puissance équipant les véhicules électriques ou hybrides existants.

Outre les caractéristiques qui viennent d'être évoquées dans le paragraphe précédent, le procédé selon cet aspect de l'invention peut présenter une ou plusieurs caractéristiques complémentaires parmi les suivantes, considérées individuellement ou selon toutes les combinaisons techniquement possibles.

Selon un aspect non limitatif de l'invention, lors de l'étape de déterminer une première limitation de courant, si le premier courant glissant déterminé est supérieur à un premier seuil de courant glissant maximal durant une deuxième période, alors la première limitation de courant est égale à un courant limite minimal.

Selon un aspect non limitatif de l'invention, lors de l'étape de déterminer une première limitation de courant, si le premier courant glissant déterminé est inférieur à un seuil de courant glissant minimal durant une troisième période, alors la première limitation de courant est égale à un courant limite maximal.

Selon un aspect non limitatif de l'invention,
- Les étapes du procédé sont réitérées,
- Lors de la réitération de l'étape de déterminer une première limitation de courant, si le premier courant glissant est strictement compris entre le premier seuil de courant glissant maximal et le seuil de courant glissant minimal durant une septième période, alors la première limitation de courant glissant est égale au courant limite minimal ou maximal déterminé lors de l'exécution précédente de l'étape de déterminer une première limitation de courant.

Selon un aspect non limitatif de l'invention, le procédé comporte les étapes, exécutées par des moyens de contrôle, de :
- Déterminer un deuxième courant glissant du composant électrique, ledit deuxième courant glissant étant déterminé sur une quatrième période ;
- Déterminer une troisième limitation de courant pour ledit composant électrique, ladite troisième limitation de courant étant fonction dudit deuxième courant glissant déterminé ;
- La consigne de limitation de courant déterminée lors de l'étape de déterminer une consigne de limitation de courant à appliquer au composant électrique étant égale à la limitation de courant inférieure parmi les première, deuxième et troisième limitations de courant déterminées.

Selon un aspect non limitatif de l'invention, lors de l'étape de déterminer une troisième limitation de courant, si la valeur du deuxième courant glissant déterminé est supérieure à un deuxième seuil de courant glissant maximal durant une cinquième période, alors la troisième limitation de courant est égale au courant limite minimal.

Selon un aspect non limitatif de l'invention, lors de l'étape de déterminer une troisième limitation de courant, si le deuxième courant glissant déterminé est inférieur au seuil de courant glissant minimal durant une sixième période, alors la troisième limitation de courant est égale au courant limite maximal.

Selon un aspect non limitatif de l'invention,
- Les étapes du procédé sont réitérées,
- Lors de la réitération de l'étape de déterminer la troisième limitation de courant, si le deuxième courant glissant est strictement compris entre le deuxième seuil de courant glissant maximal et le seuil de courant glissant minimal durant une huitième période, alors la troisième limitation de courant est égale au courant limite minimal ou maximal déterminé lors de l'exécution précédente de l'étape de déterminer une troisième limitation de courant.

Selon un aspect non limitatif de l'invention, lors de l'étape de déterminer une deuxième limitation de courant, si l'intégrale de charge limite est supérieure à un seuil d'énergie maximal, alors la deuxième limitation de courant est égale au courant limite minimal.

Selon un aspect non limitatif de l'invention, lors de l'étape de déterminer une deuxième limitation de courant, si l'intégrale de charge limite est inférieur à un seuil d'énergie minimal, alors la deuxième limitation de courant est égale au courant limite maximal.

Selon un aspect non limitatif de l'invention,
- Les étapes du procédé sont réitérées,
- Lors de la réitération de l'étape de déterminer une deuxième limitation de courant, si l'intégrale de charge limite est strictement comprise entre les seuils d'énergie minimal et maximal, alors la deuxième limitation de courant est égale au courant limite minimal ou maximal déterminé lors de l'exécution précédente de l'étape de déterminer une deuxième limitation de courant.

L'invention et ses différentes applications seront mieux comprises à la lecture de la description qui suit et à l'examen de la figure qui l'accompagne.

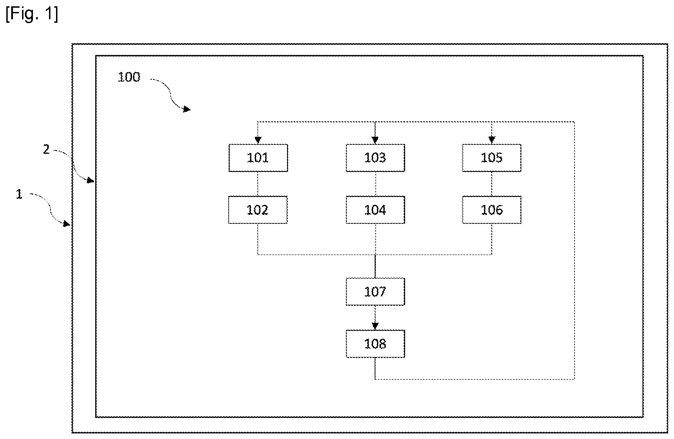

[Fig. 1] représente, de façon schématique, un mode de mise en œuvre non limitatif du procédé selon l'invention.

La figure 1 montre les étapes d'un mode de mise en œuvre du procédé 100 de protection d'un élément de connexion électrique connecté à un composant électrique d'un réseau électrique de puissance d'un véhicule 1 électrique ou hybride selon un aspect de l'invention.

Le réseau électrique de puissance peut par exemple être formé par un réseau électrique alimenté électriquement par une tension de 48V ou de 400V. Un tel réseau électrique de puissance peut par exemple comporter une machine électrique de traction, un compresseur de climatisation, un chargeur embarqué agencé pour charger la batterie de puissance du véhicule, un tel chargeur embarqué étant couramment désigné par l'homme du métier sous l'acronyme OBC pour « On Board Charger » en anglais, et un convertisseur de courant continu-continu agencé pour alimenter électriquement une batterie de servitude et le réseau de bord du véhicule électrique, un tel convertisseur de courant continu-continu étant couramment désigné par l'homme du métier par convertisseur DC/DC pour « Direct Current/Direct Current » en anglais.

La machine électrique de traction, le compresseur de climatisation, le chargeur embarqué et le convertisseur de courant continu-continu forment, dans notre exemple, les composants électriques du réseau électrique de puissance.

De façon non limitative, l'élément de connexion électrique peut quant à lui être formé par un câble électrique, un connecteur ou une barre d'interconnexion (ou busbar en anglais). Ces éléments de connexion sont utilisés pour connecter électriquement entre eux les composants électriques du réseau électrique de puissance.

Dans un exemple de réalisation non limitatif, les étapes du procédé 100 sont exécutés par des moyens de contrôle 2 du véhicule 1 pouvant être formés par une unité de contrôle véhicule (plus connue sous l'acronyme VCU pour Vehicle Control Unit en anglais).

Le procédé 100 comporte une étape de déterminer 101 un premier courant glissant du composant électrique formé, par exemple, par une batterie de puissance, le premier courant glissant étant déterminé sur une première période. Cette première période peut par exemple être de 30 secondes.

Dans une mise en œuvre non limitative, des mesures de courant peuvent être réalisés toutes les 5 secondes par des capteurs de courant (non illustrés) puis transmises à l'unité de contrôle véhicule 2. Cette dernière est ensuite apte à déterminer le premier courant glissant.

Le procédé 100 comporte également une étape de déterminer 102 une première limitation de courant pour le composant électrique, la première limitation de courant étant fonction du premier courant glissant déterminé.

Dans une mise en œuvre non limitative, lors de l'étape de déterminer 102 une première limitation de courant,
- Si le premier courant glissant est supérieur ou égal à un premier seuil de courant glissant maximal durant une deuxième période, par exemple de 25 secondes, alors la première limitation de courant est égale à un courant limite minimal ;
- Si le premier courant glissant est inférieur ou égal à un seuil de courant glissant minimal durant une troisième période, par exemple de 20 secondes, alors la première limitation de courant est égale à un courant limite maximal.

Dans cet exemple de réalisation non limitatif, la troisième période est inférieure à la deuxième période.

Le premier seuil de courant glissant maximal correspond à un courant maximal que peut supporter l'élément de connexion sur une période courte, par exemple 30 secondes.

Le seuil de courant glissant minimal correspond à un courant nominal que peut supporter l'élément de connexion en continu.

Le procédé 100 comporte également une étape de déterminer 103 une intégrale de charge limite fonction de valeurs de courant instantané du composant électrique et d'un courant nominal de l'élément de connexion.

Par exemple, Sᵢ²ₜ = MAX (0 ; ∫ (I²_{HVcomp} - I²ₙₒₘ) dt

Avec,
- Sᵢ²ₜ = intégrale de charge limite ;
- I²_{HVcomp} = courant instantané du composant électrique ;
- I²ₙₒₘ = courant nominal que peut supporter l'élément de connexion en continu.

Dans une mise en œuvre non limitative, l'unité de contrôle véhicule 2 est en mesure de déterminer l'intégrale de charge limite, à partir notamment des mesures de courant réalisées par les capteurs de courant et du courant nominal que peut supporter l'élément de connexion en continu. Ce dernier peut être préalablement renseigné lors de la conception de l'architecture électrique.

Le procédé 100 comporte en outre une étape de déterminer 104 une deuxième limitation de courant pour le composant électrique, la deuxième limitation de courant étant fonction de l'intégrale de charge limite déterminée.

Dans une mise en œuvre non limitative, lors de l'étape de déterminer 104 une deuxième limitation de courant,
- Si l'intégrale de charge limite est supérieure ou égale à un seuil d'énergie maximal, alors la deuxième limitation de courant est égale au courant limite minimal.
- Si l'intégrale de charge limite est inférieur ou égale à un seuil d'énergie minimal, par exemple zéro, alors la deuxième limitation de courant est égale au courant limite maximal.

Les seuils d'énergie en A²/s sont fonction :
- D'un courant continu nominal de l'élément de connexion ;
- D'une limite de courant de l'élément de connexion ; et
- D'une période maximale durant laquelle l'élément de connexion peut supporter un courant égal à la limite de courant.

Le procédé 100 comporte une étape de déterminer 105 un deuxième courant glissant du composant électrique, le deuxième courant glissant étant déterminé sur une quatrième période. Cette quatrième période peut par exemple être de 600 secondes.

Dans une mise en œuvre non limitative, l'unité de contrôle véhicule 2 est en mesure de déterminer le deuxième courant glissant, à partir notamment des mesures de courant réalisées par les capteurs de courant.

Le procédé 100 comporte également une étape de déterminer 106 une troisième limitation de courant pour le composant électrique, la troisième limitation de courant étant fonction du deuxième courant glissant déterminé.

Dans une mise en œuvre non limitative, lors de l'étape de déterminer 106 une troisième limitation de courant,
- Si le deuxième courant glissant est supérieur ou égal à un deuxième seuil de courant glissant maximal durant une cinquième période, par exemple de 550 secondes, alors la troisième limitation de courant est égale au courant limite minimal ;
- Si le deuxième courant glissant est inférieur ou égal au seuil de courant glissant minimal durant une sixième période, par exemple de 500 secondes, alors la troisième limitation de courant est égale au courant limite maximal.

Dans cet exemple de réalisation non limitatif, la sixième période est inférieure à la cinquième période.

Le deuxième seuil de courant glissant maximal correspond à un courant maximal que peut supporter l'élément de connexion sur une période longue, par exemple de 600 secondes. Le seuil de courant glissant minimal correspond au courant nominal que peut supporter l'élément de connexion en continu.

Le procédé 100 comporte ensuite une étape de déterminer 107 une consigne de limitation de courant à appliquer au composant électrique, la consigne de limitation de courant étant égale à la limitation de courant inférieure parmi les première, deuxième et troisième limitations de courant précédemment déterminées. Autrement dit, afin de protéger l'élément de connexion, on sélectionne la plus petite valeur de courant limite à appliquer au composant électrique.

Le procédé 100 comporte ensuite une étape d'appliquer 108 la consigne de limitation de courant au composant électrique auquel est connecté l'élément de connexion. Ainsi, dans le cas de la batterie de puissance, celle-ci peut recevoir ou transmettre un courant au maximum égal à la consigne de limitation de courant déterminée. Cette limitation permet de protéger l'élément de connexion connecté électriquement à la batterie de puissance.

Dans une mise en œuvre différente, on applique 108 une consigne de limitation de puissance au composant électrique, la consigne de limitation de puissance étant égale à la consigne de limitation de courant multipliée par une tension nominale du composant électrique.

Les étapes du procédé 100 sont ensuite réitérés.

Lors de la réitération,
- Au cours de l'étape de déterminer 102 une première limitation de courant,
   - Si le premier courant glissant est supérieur ou égal au premier seuil de courant glissant maximal durant la deuxième période, alors la première limitation de courant est égale au courant limite minimal ;
   - Si le premier courant glissant est inférieur ou égal au seuil de courant glissant minimal durant la troisième période, alors la première limitation de courant est égale au courant limite maximal ;
   - Si le premier courant glissant est strictement compris entre le premier seuil de courant glissant maximal et le seuil de courant glissant minimal durant une septième période, alors la première limitation de courant glissant est égale au courant limite minimal ou maximal déterminé lors de l'exécution précédente de l'étape de déterminer 102 une première limitation de courant;
- Au cours de l'étape de déterminer 104 une deuxième limitation de courant,
   - Si l'intégrale de charge limite est supérieure ou égale au seuil d'énergie maximal, alors la deuxième limitation de courant est égale au courant limite minimal ;
   - Si l'intégrale de charge limite est inférieur ou égale au seuil d'énergie minimal, à savoir zéro dans notre exemple, alors la deuxième limitation de courant est égale au courant limite maximal ;
   - Si l'intégrale de charge limite est strictement comprise entre le seuil d'énergie minimal et le seuil d'énergie maximal, alors la deuxième limitation de courant est égale au courant limite minimal ou maximal déterminé lors de l'exécution précédente de l'étape de déterminer 104 une deuxième limitation de courant;
- Au cours de l'étape de déterminer 106 une troisième limitation de courant,
   - Si le deuxième courant glissant est supérieur ou égal au deuxième seuil de courant glissant maximal durant la cinquième période, alors la troisième limitation de courant est égale au courant limite minimal ;
   - Si le deuxième courant glissant est inférieur ou égal au seuil de courant glissant minimal durant la sixième période, alors la troisième limitation de courant est égale au courant limite maximal.
   - Si le deuxième courant glissant est strictement compris entre le deuxième seuil de courant glissant maximal et le seuil de courant glissant minimal durant une huitième période, alors la troisième limitation de courant glissant est égale au courant limite minimal ou maximal déterminé lors de l'exécution précédente de l'étape de déterminer 106 une troisième limitation de courant

Dans cet exemple de réalisation non limitatif, la septième période est supérieure aux deuxième et troisième périodes, par exemple égale à 40 secondes. La huitième période est, quant à elle, supérieure aux cinquième et sixième périodes, par exemple égale à 700 secondes.

## Revendications

1. Procédé (100) de protection d'un élément de connexion électrique connecté à un composant électrique d'un réseau électrique de puissance d'un véhicule (1) électrique ou hybride, ledit procédé (100) étant **caractérisé en ce qu'**il comporte les étapes, exécutées par des moyens de contrôle (2) dudit véhicule (1), de :
- Déterminer (101) un premier courant glissant dudit composant électrique, ledit premier courant glissant étant déterminé sur une première période ;
- Déterminer (102) une première limitation de courant pour ledit composant électrique, ladite première limitation de courant étant fonction dudit premier courant glissant déterminé ;
- Déterminer (103) une intégrale de charge limite fonction de valeurs de courant instantané dudit composant électrique et d'un courant nominal dudit élément de connexion ;
- Déterminer (104) une deuxième limitation de courant pour ledit composant électrique, ladite deuxième limitation de courant étant fonction de ladite intégrale de charge limite déterminée ;
- Déterminer (107) une consigne de limitation de courant à appliquer audit composant électrique, ladite consigne de limitation de courant étant égale à la limitation de courant inférieure parmi lesdites première et deuxième limitations de courant déterminées ;
- Appliquer (108) ladite consigne de limitation de courant ou une consigne de limitation de puissance audit composant électrique, ladite consigne de limitation de puissance étant égale à ladite consigne de limitation de courant multipliée par une tension nominale dudit composant électrique.

2. Procédé (100) selon la revendication précédente, **caractérisé en ce que** lors de l'étape de déterminer (102) une première limitation de courant, si le premier courant glissant déterminé est supérieur à un premier seuil de courant glissant maximal durant une deuxième période, alors la première limitation de courant est égale à un courant limite minimal.

3. Procédé (100) selon l'une quelconque des revendications 1 ou 2, **caractérisé en ce que** lors de l'étape de déterminer (102) une première limitation de courant, si le premier courant glissant déterminé est inférieur à un seuil de courant glissant minimal durant une troisième période, alors la première limitation de courant est égale à un courant limite maximal.

4. Procédé (100) selon les revendications 2 et 3, **caractérisé en ce que** :
- Les étapes du procédé (100) sont réitérées,
- Lors de la réitération de l'étape de déterminer (102) une première limitation de courant, si le premier courant glissant est strictement compris entre le premier seuil de courant glissant maximal et le seuil de courant glissant minimal durant une septième période, alors la première limitation de courant glissant est égale au courant limite minimal ou maximal déterminé lors de l'exécution précédente de l'étape de déterminer (102) une première limitation de courant.

5. Procédé selon l'une quelconque des revendications précédentes, **caractérisé en ce qu'**il comporte les étapes, exécutées par les moyens de contrôle (2), de :
- Déterminer (105) un deuxième courant glissant du composant électrique, ledit deuxième courant glissant étant déterminé sur une quatrième période ;
- Déterminer (106) une troisième limitation de courant pour ledit composant électrique, ladite troisième limitation de courant étant fonction dudit deuxième courant glissant déterminé ;
- La consigne de limitation de courant déterminée lors de l'étape de déterminer (107) une consigne de limitation de courant à appliquer audit composant électrique étant égale à la limitation de courant inférieure parmi les première, deuxième et troisième limitations de courant déterminées.

6. Procédé (100) selon la revendication précédente, **caractérisé en ce que** lors de l'étape de déterminer (106) une troisième limitation de courant, si la valeur du deuxième courant glissant déterminé est supérieure à un deuxième seuil de courant glissant maximal durant une cinquième période, alors la troisième limitation de courant est égale au courant limite minimal.

7. Procédé (100) selon l'une quelconque des revendications 5 ou 6, **caractérisé en ce que** lors de l'étape de déterminer (106) une troisième limitation de courant, si le deuxième courant glissant déterminé est inférieur au seuil de courant glissant minimal durant une sixième période, alors la troisième limitation de courant est égale au courant limite maximal.

8. Procédé (100) selon les revendications 5, 6 et 7, **caractérisé en ce que**
- Les étapes du procédé (100) sont réitérées,
- Lors de la réitération de l'étape de déterminer (106) la troisième limitation de courant, si le deuxième courant glissant est strictement compris entre le deuxième seuil de courant glissant maximal et le seuil de courant glissant minimal durant une huitième période, alors la troisième limitation de courant est égale au courant limite minimal ou maximal déterminé lors de l'exécution précédente de l'étape de déterminer (106) une troisième limitation de courant.

9. Procédé (100) selon l'une quelconque des revendications précédentes, **caractérisé en ce que** lors de l'étape de déterminer (104) une deuxième limitation de courant, si l'intégrale de charge limite est supérieure à un seuil d'énergie maximal, alors la deuxième limitation de courant est égale au courant limite minimal.

10. Procédé (100) selon l'une quelconque des revendications précédentes, **caractérisé en ce que** lors de l'étape de déterminer (104) une deuxième limitation de courant, si l'intégrale de charge limite est inférieur à un seuil d'énergie minimal, alors la deuxième limitation de courant est égale au courant limite maximal.

## Patentansprüche

1. Verfahren (100) zum Schutz eines elektrischen Verbindungselements, das mit einer elektrischen Komponente eines elektrischen Leistungsnetzes eines elektrischen oder hybriden Fahrzeugs (1) verbunden ist, wobei das Verfahren (100) **dadurch gekennzeichnet ist, dass** es die Schritte umfasst, die durch Steuermittel (2) des Fahrzeugs (1) durchgeführt werden, um:
- Bestimmung (101) eines ersten Gleitstroms des elektrischen Bauteils, wobei der erste Gleitstrom über eine erste Periode bestimmt wird;
- Bestimmen (102) einer ersten Strombegrenzung für das elektrische Bauteil, wobei die erste Strombegrenzung eine Funktion des ersten bestimmten Gleitstroms ist;
- Bestimmung (103) eines Grenzlastintegrals in Abhängigkeit von momentanen Stromwerten des elektrischen Bauteils und eines Nennstroms des Verbindungselements;
- Bestimmen (104) einer zweiten Strombegrenzung für das elektrische Bauteil, wobei die zweite Strombegrenzung eine Funktion des bestimmten Grenzlastintegrals ist;
- Bestimmen (107) eines Strombegrenzungssollwerts, der an das elektrische Bauteil anzulegen ist, wobei der Strombegrenzungssollwert gleich dem unteren der ersten und zweiten bestimmten Strombegrenzung ist;
- Anwenden (108) des Strombegrenzungssollwerts oder eines Leistungsbegrenzungssollwerts auf das elektrische Bauteil, wobei der Leistungsbegrenzungssollwert gleich dem mit einer Nennspannung des elektrischen Bauteils multiplizierten Strombegrenzungssollwert ist.

2. Verfahren (100) nach dem vorhergehenden Anspruch, **dadurch gekennzeichnet, dass** bei dem Schritt des Bestimmens (102) einer ersten Strombegrenzung, wenn der bestimmte erste Gleitstrom während einer zweiten Periode größer als ein erster maximaler Gleitstromschwellenwert ist, dann die erste Strombegrenzung gleich einem minimalen Grenzstrom ist.

3. Verfahren (100) nach einem der Ansprüche 1 oder 2, **dadurch gekennzeichnet, dass** bei dem Schritt des Bestimmens (102) einer ersten Strombegrenzung, wenn der bestimmte erste Gleitstrom während einer dritten Periode kleiner als ein minimaler Gleitstromschwellenwert ist, dann die erste Strombegrenzung gleich einem maximalen Grenzstrom ist.

4. Verfahren (100) nach den Ansprüchen 2 und 3, **dadurch gekennzeichnet, dass**
- Die Verfahrensschritte (100) werden wiederholt,
- Wenn der Schritt des Ermittelns (102) wiederholt wird, um eine erste Strombegrenzung zu bestimmen, wenn der erste Gleitstrom innerhalb einer siebten Periode genau zwischen der ersten maximalen Gleitstromschwelle und der minimalen Gleitstromschwelle liegt, dann ist die erste Gleitstrombegrenzung gleich dem minimalen oder maximalen Grenzstrom, der bei der vorherigen Ausführung des Schritts des Ermittelns (102) einer ersten Strombegrenzung ermittelt wurde.

5. Verfahren nach einem der vorhergehenden Ansprüche, **dadurch gekennzeichnet, dass** es die von den Kontrollmitteln (2) durchgeführten Schritte umfasst:
- Bestimmung (105) eines zweiten Gleitstroms des elektrischen Bauteils, wobei der zweite Gleitstrom über einen vierten Zeitraum bestimmt wird;
- Bestimmen (106) einer dritten Strombegrenzung für das elektrische Bauteil, wobei die dritte Strombegrenzung eine Funktion des bestimmten zweiten Gleitstroms ist;
- Der in dem Schritt des Ermittelns (107) ermittelte Strombegrenzungssollwert ist gleich dem unteren der ersten, zweiten und dritten ermittelten Strombegrenzung.

6. Verfahren (100) nach dem vorhergehenden Anspruch, **dadurch gekennzeichnet, dass** bei dem Schritt des Bestimmens (106) einer dritten Strombegrenzung, wenn der Wert des bestimmten zweiten Gleitstroms größer als ein zweiter maximaler Gleitstromschwellenwert während einer fünften Periode ist, dann die dritte Strombegrenzung gleich dem minimalen Grenzstrom ist.

7. Verfahren (100) nach einem der Ansprüche 5 oder 6, **dadurch gekennzeichnet, dass** bei dem Schritt des Bestimmens (106) einer dritten Strombegrenzung, wenn der bestimmte zweite Gleitstrom während einer sechsten Periode kleiner als die minimale Gleitstromschwelle ist, dann die dritte Strombegrenzung gleich dem maximalen Grenzstrom ist.

8. Verfahren (100) nach den Ansprüchen 5, 6 und 7, **dadurch gekennzeichnet, dass**
- Die Verfahrensschritte (100) werden wiederholt,
- Wenn bei der Wiederholung des Schritts zur Bestimmung (106) der dritten Strombegrenzung der zweite Gleitstrom während einer achten Periode genau zwischen der zweiten maximalen und der minimalen Gleitstromschwelle liegt, dann ist die dritte Strombegrenzung gleich dem minimalen oder maximalen Grenzstrom, der bei der vorherigen Ausführung des Schritts zur Bestimmung (106) einer dritten Strombegrenzung ermittelt wurde.

9. Verfahren (100) nach einem der vorhergehenden Ansprüche, **dadurch gekennzeichnet, dass** bei dem Schritt des Bestimmens (104) einer zweiten Strombegrenzung dann, wenn das Grenzladungsintegral größer als ein maximaler Energieschwellenwert ist, die zweite Strombegrenzung gleich dem minimalen Grenzstrom ist.

10. Verfahren (100) nach einem der vorhergehenden Ansprüche, **dadurch gekennzeichnet, dass** bei dem Schritt des Bestimmens (104) einer zweiten Strombegrenzung, wenn das Grenzladungsintegral kleiner als eine minimale Energieschwelle ist, die zweite Strombegrenzung gleich dem maximalen Grenzstrom ist.

## Claims

1. Method (100) for protecting an electrical connection element connected to an electrical component of an electrical power network of an electric or hybrid vehicle (1), the method (100) being **characterized in that** it comprises the steps performed by control means (2) of the vehicle (1) in order to:
- Determination (101) of a first sliding current of the electrical component, wherein the first sliding current is determined over a first period;
- Determining (102) a first current limit for the electrical component, wherein the first current limit is a function of the first determined sliding current;
- Determination (103) of a cut-off load integral as a function of instantaneous current values of the electrical component and a rated current of the coupling element;
- Determining (104) a second current limit for the electrical component, wherein the second current limit is a function of the determined limit load integral;
- Determining (107) a current limitation setpoint to be applied to the electrical component, wherein the current limitation setpoint is equal to the lower of the first and second determined current limitation;
- Apply (108) the current limiting setpoint or a power limiting setpoint to the electrical component, wherein the power limiting setpoint is equal to the current limiting setpoint multiplied by a rated voltage of the electrical component.

2. Method (100) according to the preceding claim, **characterized in that**, in the step of determining (102) a first current limit, if the determined first sliding current during a second period is greater than a first maximum sliding current threshold value, then the first current limit is equal to a minimum limiting current.

3. Method (100) according to claim 1 or 2, **characterized in that** in the step of determining (102) a first current limit, if the determined first sliding current is less than a minimum sliding current threshold value during a third period, then the first current limit is equal to a maximum limiting current.

4. Method (100) according to Claims 2 and 3, **characterized in that**
- The process steps (100) are repeated,
- If the step of determining (102) is repeated in order to determine a first current limit, if the first sliding current within a seventh period exactly between the first maximum sliding current threshold and the minimum sliding current threshold is, then the first sliding current limit is equal to the minimum or maximum limiting current, which in the previous execution of the step of determining (102) a first current limit was determined.

5. Method according to any one of the preceding claims, **characterized in that** it comprises the steps carried out by the control means (2):
- Determination (105) of a second sliding current of the electrical component, wherein the second sliding current is determined over a fourth period of time;
- Determining (106) a third current limit for the electrical component, wherein the third current limit is a function of the determined second sliding current;
- The current limiting desired value determined in the step of determining (107) is equal to the lower of the first, second and third determined current limiting.

6. Method (100) according to the preceding claim, **characterized in that**, in the step of determining (106) a third current limit, if the value of the determined second sliding current is greater than a second maximum sliding current threshold value during a fifth period, then the third current limit is equal to the minimum limiting current.

7. Method (100) according to any one of claims 5 or 6, **characterized in that** in the step of determining (106) a third current limit, if the determined second sliding current during a sixth period is less than the minimum sliding current threshold, then the third current limit is equal to the maximum limiting current.

8. Method (100) according to claims 5, 6 and 7, **characterized in that**
- The process steps (100) are repeated,
- If, during the repetition of the step for determining (106) the third current limit, the second sliding current lies exactly between the second maximum and the minimum sliding current threshold during an eighth period, then the third current limit is equal to the minimum or maximum limiting current determined during the previous execution of the step for determining (106) a third current limit.

9. Method (100) of any preceding claim, **characterized in that** in the step of determining (104) a second current limit when the limit charge integral is greater than a maximum energy threshold, the second current limit is equal to the minimum limit current.

10. Method (100) of any preceding claim, **characterized in that** in the step of determining (104) a second current limit when the limit charge integral is less than a minimum energy threshold, the second current limit is equal to the maximum limit current.
